# EUROPÄISCHE PATENTSCHRIFT

(11) **EP 2 611 690 B1**
(45) Veröffentlichungstag und Bekanntmachung des Hinweises auf die Patenterteilung: **01.11.2017**
(21) Anmeldenummer: 11755265.3
(22) Anmeldetag: 23.08.2011
(51) Int. Cl.: B60N 2/015, B60N 2/427, B64D 11/06

(54) **SITZBEFESTIGUNGSVORRICHTUNG ZUR BEFESTIGUNG EINES FAHRZEUGSITZES UND FAHRZEUGSITZ MIT EINER DERARTIGEN SITZBEFESTIGUNGSVORRICHTUNG**
SEAT FIXING DEVICE FOR FIXING A VEHICLE SEAT, AND VEHICLE SEAT COMPRISING SUCH A SEAT FIXING DEVICE
DISPOSITIF DE FIXATION DE SIÈGE POUR LA FIXATION D'UN SIÈGE DE VÉHICULE ET SIÈGE DE VÉHICULE DOTÉ D'UN TEL DISPOSITIF DE FIXATION DE SIÈGE

(30) Priorität: 01.09.2010 DE 102010036091
(43) Veröffentlichungstag der Anmeldung: 10.07.2013
(73) Patentinhaber: Recaro Aircraft Seating GmbH & Co. KG, 74523 Schwäbisch Hall (DE)
(72) Erfinder: BAUMANN, Jürgen, 78351 Bodman-Ludwigshafen (DE)
(74) Vertreter: Daub, Thomas
(86) Internationale Anmeldenummer: PCT/EP2011/004223
(87) Internationale Veröffentlichungsnummer: WO 2012/028269

(56) Entgegenhaltungen:
- EP-B1- 1 794 052
- DE-A1- 19 851 392
- US-A- 5 871 318
- US-A1- 2006 263 164

## Beschreibung

### Stand der Technik

Die Erfindung geht aus von einer Sitzbefestigungsvorrichtung zur Befestigung eines Fahrzeugsitzes, insbesondere eines Fluggastsitzes, an zumindest einer an einer Fahrzeugstruktur angebrachten Befestigungsschiene nach dem Oberbegriff des Patentanspruchs 1.

Aus der EP 1 794 052 A1 ist eine derartige Sitzbefestigungsvorrichtung bekannt. Diese weist ein Befestigungsmittel, das in einem verriegelten Zustand eine Klemmverbindung mit einer Profilflanke einer Befestigungsschiene herstellt, die in einem Kabinenboden integriert ist, sowie eine Betätigungseinheit auf.

Im Falle eines Aufprallereignisses ist es bei Fahrzeugen, die zur Beförderung von Passagieren vorgesehen und zu diesem Zweck mit Fahrzeugsitzen ausgestattet sind, von besonderer Bedeutung, die Integrität der verwendeten Bauteile zu bewahren. Dabei steht diese Forderung oftmals im Widerspruch zu einem angestrebten möglichst geringen Leergewicht des Fahrzeugs.

Des Weiteren ist aus der US 2006/263164 A1 eine Sitzbefestigungsvorrichtung zur Befestigung eines Fahrzeugsitzes, insbesondere eines Fluggastsitzes, an zumindest einer an einer Fahrzeugstruktur angebrachten Befestigungsschiene, mit einem Befestigungsmittel, das zu einer Kopplung mit der zumindest einen Befestigungsschiene vorgesehen ist, und mit einer Kraftübertragungseinheit, die dazu vorgesehen ist, in einem Normalbetriebsmodus einen ersten Krafteinleitungsweg einer über den Fahrzeugsitz in die Fahrzeugstruktur eingeleiteten Gewichts- und Beschleunigungskraft bereitzustellen, wobei die Kraftübertragungseinheit ein Übertragungsmittel aufweist, das dazu vorgesehen ist, in einem Aufprallmodus eine Erzeugung zumindest eines zweiten Krafteinleitungswegs der über den Fahrzeugsitz in die Fahrzeugstruktur eingeleiteten Gewichts- und Beschleunigungskraft zumindest zu initiieren, wobei das Befestigungsmittel zumindest ein Mitnahmeelement aufweist, das dazu vorgesehen ist, im Aufprallmodus von einem beschleunigten Teil des Fahrzeugsitzes mitgeführt zu werden, bekannt.

Der vorliegenden Erfindung liegt insbesondere die Aufgabe zugrunde, eine Lösung für eine Sitzbefestigungsvorrichtung bereitzustellen, durch die von Sicherheitsbestimmungen bedingte Festigkeitsanforderungen an verwendete mechanische Strukturen verringert werden, so dass diese einfach, kostengünstig und gewichtsparend ausgelegt werden können, wobei insbesondere die Sitzbefestigungsvorrichtung insbesondere Montagefreundlich ausgestaltet werden kann, da das Übertragungsmittel vorteilhaft verliersicher mit dem Befestigungsmittel verbunden werden kann, wodurch eine vereinfachte Montage erreicht werden kann.

Diese Aufgabe wird durch eine Sitzbefestigungsvorrichtung mit den Merkmalen des Patentanspruchs 1 sowie durch einen Fahrzeugsitz mit einer derartigen Sitzbefestigungsvorrichtung gemäß Patentanspruch 8 gelöst. Weitere vorteilhafte Weiterbildungen der Erfindung können den Unteransprüchen entnommen werden.

### Vorteile der Erfindung

Die Erfindung geht aus von einer Sitzbefestigungsvorrichtung zur Befestigung eines Fahrzeugsitzes, insbesondere eines Fluggastsitzes, an zumindest einer an einer Fahrzeugstruktur angebrachten Befestigungsschiene, die ein Befestigungsmittel, das zur Kopplung mit der zumindest einen Befestigungsschiene vorgesehen ist, und eine Kraftübertragungseinheit umfasst, die dazu vorgesehen ist, in einem Normalbetriebsmodus einen ersten Krafteinleitungsweg einer über den Fahrzeugsitz in die Fahrzeugstruktur eingeleiteten Gewichts- und Beschleunigungskraft bereitzustellen, wobei die Kraftübertragungseinheit ein Übertragungsmittel aufweist, das dazu vorgesehen ist, in einem Aufprallmodus eine Erzeugung zumindest eines zweiten Krafteinleitungswegs der über den Fahrzeugsitz in die Fahrzeugstruktur eingeleiteten Gewichts- und Beschleunigungskraft zumindest zu initiieren, wobei das Befestigungsmittel zumindest ein Mitnahmeelement aufweist, das dazu vorgesehen ist, im Aufprallmodus von einem beschleunigten Teil des Fahrzeugsitzes mitgeführt zu werden, wobei der zweite Krafteinleitungsweg über das Mitnahmeelement führt. Das Mitnahmeelement ist von dem Übertragungsmittel nach außen im Wesentlichen abgedeckt. Unter einer "Kraftübertragungseinheit" soll in diesem Zusammenhang insbesondere eine serielle Anordnung von Konstruktionselementen verstanden werden, bei der eine an einem Ende der seriellen Anordnung wirkende Kraft bis zu einem anderen Ende der seriellen Anordnung weitergeleitet wird. Unter einem "Normalbetriebsmodus" der Sitzbefestigungsvorrichtung soll in diesem Zusammenhang insbesondere eine Betriebsweise verstanden werden, bei der die in die Fahrzeugstruktur einzuleitende Gewichts- und Beschleunigungskraft einen spezifizierten und vorab definierten Höchstwert unterschreitet und alle Elemente der Sitzbefestigungsvorrichtung ihre nominellen Funktions- und Materialeigenschaften aufweisen. Unter einer "Fahrzeugstruktur" sollen in diesem Zusammenhang insbesondere alle konstruktiven Trägerelemente des Fahrzeugs verstanden werden, die dazu vorgesehen sind, Gewichts- und Beschleunigungskräfte des Fahrzeugs und dessen Inhalts aufzunehmen. Unter einer "Beschleunigungskraft" soll in diesem Zusammenhang insbesondere eine aufgrund einer Massenträgheit einer Masse und einer beschleunigten Bewegung der Masse hervorgerufene Kraft verstanden werden, wobei die beschleunigte Bewegung insbesondere auch eine negative Beschleunigung in Form einer Abbremsung sein kann.

Unter einem "Aufprallmodus" der Sitzbefestigungsvorrichtung soll in diesem Zusammenhang insbesondere eine Betriebsweise verstanden werden, bei der die in die Fahrzeugstruktur einzuleitende Gewichts- und Beschleunigungskraft einen spezifizierten und vorab definierten Höchstwert überschreitet. Der Aufprallmodus kann beispielsweise durch ein Aufprallereignis eines Fahrzeugs, in dem die Sitzbefestigungsvorrichtung installiert ist, aufgrund von auftretenden Beschleunigungs- bzw. Trägheitskräften erzeugt werden. Einem Fachmann sind die für die verschiedenen Fahrzeugtypen in standardisierter Form beschriebenen Aufprallereignisse und entsprechende Prüfprozeduren geläufig. Unter "initiieren" soll in diesem Zusammenhang insbesondere verstanden werden, dass eine Voraussetzung für das Eintreten des initiierten Ereignisses geschaffen wird.

Bei einer entsprechenden Ausgestaltung kann eine Aufnahme einer durch das Aufprallereignis auftretenden mechanischen Überlast durch vorhandene, mechanisch stabile Komponenten erzielt werden, so dass eine mechanische Belastung von Vorrichtungen, die zu einer Erhöhung eines Sitzkomforts eines Sitzbenutzers beitragen, wie beispielsweise Anti-Rattle-Vorrichtungen oder Vorrichtungen zur Vibrationsdämpfung, vorteilhaft vermieden wird und an diese Vorrichtungen nur geringe mechanische Festigkeitsanforderungen gestellt werden müssen, wodurch trotz einer Erfüllung aller Sicherheitsanforderungen Kosten, Material und Gewicht eingespart werden können.

In einer vorteilhaften Ausgestaltung wird vorgeschlagen, dass das Übertragungsmittel die Erzeugung des zweiten Krafteinleitungswegs der über den Fahrzeugsitz in die Fahrzeugstruktur eingeleiteten Gewichts- und Beschleunigungskraft durch mechanische Verformung initiiert. Dadurch kann durch Berücksichtigung stoffspezifischer Festigkeitswerte und durch Formgebung die Aufnahme der mechanischen Überlast beim Aufprallereignis durch mechanisch stabile Komponenten in besonders wohl definierter Form ausgelegt werden.

Wenn die Verformung des Übertragungsmittels zur Initiierung der Erzeugung des zweiten Krafteinleitungswegs im Wesentlichen linear-elastischer Natur ist, kann vorteilhaft im Falle einer durch das Aufprallereignis auftretenden geringfügigen mechanischen Überlast eine reversible Verformung erreicht werden, so dass nach einem Ende des Aufprallmodus vorteilhaft wieder der Normalbetriebsmodus der Sitzbefestigungsvorrichtung eingenommen werden kann. Unter "linear-elastischer Natur" soll in diesem Zusammenhang insbesondere verstanden werden, dass die Verformung gemäß dem Hookeschen Gesetz erfolgt. Unter "im Wesentlichen linear-elastisch" soll in diesem Zusammenhang verstanden werden, dass eine Abweichung von der Linearität weniger als 10%, bevorzugt weniger als 5% beträgt. Beispielsweise kann das Übertragungsmittel aus einem Elastomer-Werkstoff gefertigt sein, wodurch im Fall des Aufprallereignisses Materialbrüche und eine damit verbundene ungleichmäßige Verformung des Übertragungsmittels und als Folge eine ungleichmäßige Krafteinleitung vermieden werden können.

Dadurch, dass das Befestigungsmittel zumindest ein Mitnahmeelement aufweist, das dazu vorgesehen ist, im Aufprallmodus von einem beschleunigten Teil des Fahrzeugsitzes mitgeführt zu werden kann bei geeigneter Auslegung nach einer Initiierung durch das Übertragungsmittel eine besonders einfache Lösung zur Erzeugung des zweiten Krafteinleitungswegs bereitgestellt werden.

Wenn das Mitnahmeelement in einer Richtung quer zu einer Haupterstreckungsrichtung des Befestigungsmittels eine Abmessung aufweist, die größer ist als Abmessungen, in dieser Richtung gemessen, von Teilen des Befestigungsmittels, die in der Haupterstreckungsrichtung vor oder hinter dem Mitnahmeelement angeordnet sind, kann eine einfache und kostengünstige Lösung für ein Mitnahmeelement bereitgestellt werden. Beispielsweise kann das Befestigungsmittel eine Zylindersymmetrie mit im Wesentlichen kreisförmigem Querschnitt und einen in der Haupterstreckungsrichtung variierenden Durchmesser aufweisen, wobei das Mitnahmeelement von einem in der Haupterstreckungsrichtung zusammenhängenden Teilbereich des Befestigungsmittels gebildet ist, der einen größeren Durchmesser besitzt als in der Haupterstreckungsrichtung an den Teilbereich angrenzende Bereiche des Befestigungsmittels, wodurch eine besonders einfache und kostengünstige Fertigung des Befestigungsmittels ermöglicht werden kann. Zudem wird vorgeschlagen, dass das Übertragungsmittel im Wesentlichen aus einem Kunststoffmaterial besteht. Unter "im Wesentlichen" soll in diesem Zusammenhang insbesondere bevorzugt ein Anteil von mehr als 50% und besonders bevorzugt von mehr als 70% eines Volumens des Übertragungsmittels verstanden werden. Dadurch kann das Übertragungsmittel kostengünstig und in besonders leichter Ausführung hergestellt werden. Besonders bevorzugt können hierbei elastomere Kunststoffmaterialien Verwendung finden.

Wenn das Mitnahmeelement von dem Übertragungsmittel nach außen im Wesentlichen abgedeckt ist, kann das Übertragungsmittel vorteilhaft verliersicher mit dem Befestigungsmittel verbunden werden, wodurch eine vereinfachte Montage erreicht werden kann. Unter "im Wesentlichen" soll in diesem Zusammenhang insbesondere mehr als 50%, besonders bevorzugt mehr als 70% einer nach außen gerichteten Oberfläche des Mitnahmeelements verstanden werden.

In einer bevorzugten Ausführung kann zwischen dem Übertragungsmittel und dem Mitnahmeelement eine Reibschlussverbindung bestehen, so dass das Übertragungsmittel durch die Reibschlussverbindung bei einer Montage in Position gehalten wird und das Mitnahmeelement relativ zum Übertragungselement durch eine Überwindung einer Haft-und Gleitreibungskraft der Reibschlussverbindung gleitend bewegbar ist.

### Zeichnungen

Weitere Vorteile ergeben sich aus der folgenden Zeichnungsbeschreibung. In den Zeichnungen sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines als Fluggastsitz ausgebildeten Fahrzeugsitzes in einem Einbauzustand,
- Fig. 2: eine Detailansicht einer Sitzfußeinheit des Fluggastsitzes gemäß der Fig. 1 in einer Vorderansicht mit einer Kraftübertragungseinheit in einem Normalbetriebsmodus,
- Fig. 3: die Detailansicht gemäß der Fig. 2 mit einem ersten Krafteineinleitungsweg und
- Fig. 4: eine Detailansicht einer Sitzfußeinheit des Fluggastsitzes gemäß der Fig. 1 in einer Vorderansicht mit der Kraftübertragungseinheit in einem Aufprallmodus.

### Beschreibung des Ausführungsbeispiels

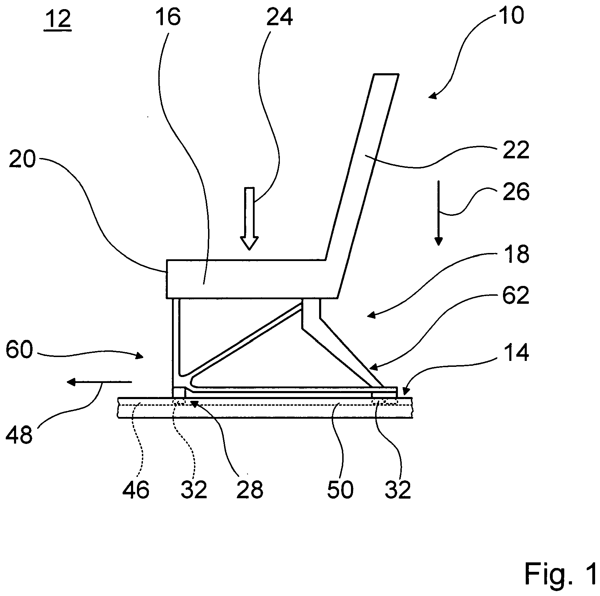

Figur 1 zeigt in einer Seitenansicht einen als Fluggastsitz 10 ausgebildeten Fahrzeugsitz in einem Einbauzustand in einem Innenraum 12 eines nicht näher dargestellten, als Flugzeug ausgebildeten Fahrzeugs. Der Innenraum 12 des Flugzeugs umfasst eine als Kabinenboden ausgebildete Fahrzeugstruktur 14 und in dem Kabinenboden integrierte Befestigungsschienen 46, von denen in der Seitenansicht der Fig. 1 nur eine Befestigungsschiene 46 gezeigt ist.

Der Fahrzeugsitz kann in weiteren Ausführungen aber auch in anderen Personentransportmitteln genutzt werden, und zwar beispielsweise in einem Eisenbahnwagen, einem Reisebus oder einem Passagierschiff.

Der Fluggastsitz 10 weist ein Sitzteil 16 auf, das eine im Wesentlichen horizontale Sitzfläche bildet und mittels einer Aufständereinheit 18 auf der Fahrzeugstruktur 14 aufgeständert ist. Die Aufständereinheit 18 weist eine vordere Sitzfußeinheit 60 auf, die bezüglich einer senkrecht zum Kabinenboden ausgerichteten vertikalen Richtung 26 unterhalb einer vom Sitzteil 16 gebildeten Vorderkante 20 angeordnet ist. Die Sitzfußeinheit 60 ist in einem vorderen Bereich des Fluggastsitzes 10 zu dessen Abstützung vorgesehen. Ferner weist die Aufständereinheit 18 eine weitere Sitzfußeinheit 62 auf, die zur Abstützung des Fluggastsitzes 10 in dessen hinterem Bereich und unterhalb einer Rückenlehne 22 des Fluggastsitzes 10 angeordnet ist.

Der Fluggastsitz 10 umfasst Sitzbefestigungsvorrichtungen, die jeweils den Sitzfußeinheiten 60, 62 zugeordnet und an diesen angebracht sind. Der Aufbau und die Funktion der

Sitzbefestigungsvorrichtungen sind an allen Sitzfußeinheiten 60, 62 identisch und werden im Folgenden exemplarisch anhand einer Sitzbefestigungsvorrichtung einer der Sitzfußeinheiten 60, 62 erläutert.

Die Sitzbefestigungsvorrichtung weist ein Befestigungsmittel 32 auf, das zu einer Kopplung mit der Befestigungsschiene 46 vorgesehen ist. In der Darstellung der Figur 1 ist der Fluggastsitz 10 in seinem am Kabinenboden befestigten Zustand gezeigt, wobei das Befestigungsmittel 32 in einem in der Befestigungsschiene 46 ausgesparten Längskanal 50 angeordnet ist, der sich in einer Richtung 48 erstreckt, die parallel zu einer Längsrichtung des Flugzeugs verläuft.

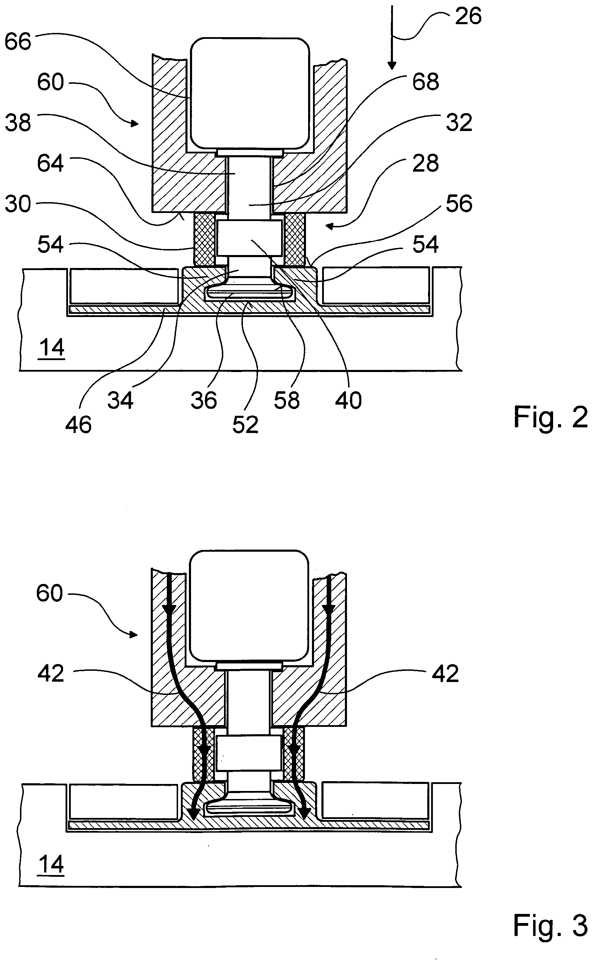

Das mit der Befestigungsschiene 46 gekoppelte Befestigungsmittel 32 ist in einer Detailansicht in Figur 2 näher dargestellt. Diese Ausführung einer Befestigungsschiene 46 ist im Stand der Technik bekannt und wird daher hier nur insoweit näher beschrieben, wie es für die Darstellung der Erfindung notwendig ist. Die Befestigungsschiene 46 schließt mit einer der Sitzfußeinheit 60, 62 zugewandten Oberseite 56 bündig mit dem Kabinenboden des Innenraums 12 des Flugzeugs ab. Die Befestigungsschiene 46 wird von einem Hohlprofil gebildet, das an seiner Oberseite 56 mit einander zugewandten Profilflanken 54 und an seiner Unterseite mit einem geschlossenen Schienengrund 52 den Längskanal 50 begrenzt. Der Längskanal 50 weist in bekannter Weise in einem vorgegebenen Maß nicht dargestellte Durchtrittsöffnungen auf, die voneinander einen gleichmäßigen Abstand aufweisen und bohrungsartig ausgeführt sind.

Die Sitzbefestigungsvorrichtung umfasst eine erste Kraftübertragungseinheit 28, die dazu vorgesehen ist, in einem Normalbetriebsmodus einen ersten Krafteinleitungsweg 42 einer über den Fluggastsitz 10 in die Fahrzeugstruktur 14 eingeleiteten Gewichts- und Beschleunigungskraft 24 bereitzustellen (Fig. 3).

Die erste Kraftübertragungseinheit 28 umfasst ein dem Kabinenboden zugewandtes Ende 64 der Sitzfußeinheit 60, 62 und ein Übertragungsmittel 30. Das Übertragungsmittel 30 ist von einem ringförmigen Kunststoffkörper gebildet und besteht im Wesentlichen aus Polyoxymethylen (POM). Im Normalbetriebsmodus wird die über den Fluggastsitz 10 in die Fahrzeugstruktur 14 eingeleitete Gewichts- und Beschleunigungskraft 24 über das Ende 64 der Sitzfußeinheit 60, 62 zu dem Übertragungsmittel 30 und von dem Übertragungsmittel 30 weiter zu der der Sitzfußeinheit 60, 62 zugewandten Oberseite 56 der Befestigungsschiene 46 übertragen. Aufgrund von in den folgenden Abschnitten beschriebenen Materialeigenschaften des Übertragungsmittels 30 ist dieses dazu vorgesehen, durch Federwirkung eine Dämpfung von extern angeregten Vibrationen am Fluggastsitz 10 herbeizuführen und einen Sitzkomfort für einen Sitzbenutzer zu erhöhen.

Das Befestigungsmittel 32 der Sitzbefestigungsvorrichtung ist von einem Verriegelungsbolzen gebildet, der in der an der Befestigungsschiene 46 positionierten Stellung (Fig. 2 und 3) mit einer Haupterstreckungsrichtung in der vertikalen Richtung 26 senkrecht zum Kabinenboden angeordnet ist. An einem der Befestigungsschiene 46 zugewandten unteren Ende 34 ist das Befestigungsmittel 32 in Form eines Scheibenelements 36 ausgebildet, das gegenüber einem der Befestigungsschiene 46 abgewandten oberen Bereich 38 einen größeren Durchmesser in einer Richtung quer zu der Haupterstreckungsrichtung des Befestigungsmittels 32 aufweist.

Der obere Bereich 38 des Befestigungsmittels 32 ist in einem Aufnahmebereich 66 der Sitzfußeinheit 60, 62 angeordnet, der als ein aus der Sitzfußeinheit 60, 62 ausgesparter Bereich ausgebildet ist. Der Verriegelungsbolzen ist in einem befestigten Zustand der Sitzbefestigungsvorrichtung an der Sitzfußeinheit 60, 62 durch eine Öffnung 68 in einer der Befestigungsschiene 46 zugewandten Bodenfläche der Sitzfußeinheit 60, 62 geführt.

Weiterhin umfasst das Befestigungsmittel 32 ein Mitnahmeelement 40, das eine von einem Durchmesser gebildete Abmessung in der Richtung quer zu der Haupterstreckungsrichtung des Befestigungsmittels 32 aufweist, die größer ist als von Durchmessern gebildete Abmessungen, in dieser Richtung, von Teilen des Befestigungsmittels 32, die in der Haupterstreckungsrichtung vor oder hinter dem Mitnahmeelement 40 angeordnet sind. Das Mitnahmeelement 40 ist in einem gesamten Außenumfang in Anlage mit dem Übertragungsmittel 30 und somit im Wesentlichen von dem Übertragungsmittel 30 nach außen abgedeckt. Zwischen dem Übertragungsmittel 30 und dem Mitnahmeelement 40 besteht eine Reibschlussverbindung. Die Funktion des Mitnahmeelements 40 wird in den folgenden Abschnitten beschrieben.

Das Scheibenelement 36 des Befestigungsmittels 32 der Sitzbefestigungsvorrichtung an der Sitzfußeinheit 60, 62 wird durch ein Federelement, das aus Gründen der Übersicht nicht dargestellt ist, entgegen der vertikalen Richtung 26, vom Schienengrund 52 der Befestigungsschiene 46 weg, mit einer Federkraft beaufschlagt und mit unteren Innenflächen 58 der Profilflanken 54 der Befestigungsschiene 46 zur Anlage gebracht, wodurch in bekannter Weise Fertigungstoleranzen von Bauteilen ausgeglichen werden, die ansonsten zu unerwünschter Geräuschbildung führen würden (Anti-Rattle-Vorrichtung). Die Federkraft ist so ausgelegt, dass sie größer ist als die Haft-und Gleitreibungskraft der Reibschlussverbindung zwischen dem Übertragungsmittel 30 und dem Mitnahmeelement 40, so dass das Mitnahmeelement 40 gegenüber dem Übertragungsmittel 30 im Normalbetriebsmodus gleitend bewegbar ist.

Wie die Darstellung des ersten Krafteinleitungswegs 42 in der Fig. 2 zeigt, ist das Befestigungsmittel 32 im Normalbetriebsmodus durch die über den Fluggastsitz 10 in die Fahrzeugstruktur 14 eingeleitete Gewichts- und Beschleunigungskraft 24 nicht belastet.

Bei Überschreitung eines vorbestimmten Grenzwerts der vom Fluggastsitz 10 auf dem ersten Krafteinleitungsweg 42 über das Übertragungsmittel 30 übertragenen und in die Fahrzeugstruktur 14 eingeleiteten Gewichts- und Beschleunigungskraft 24 ist die Sitzbefestigungsvorrichtung dazu vorgesehen, vom Normalbetriebsmodus in einen Aufprallmodus zu wechseln. Im Aufprallmodus ist das Übertragungsmittel 30 dazu vorgesehen, eine Voraussetzung zu einer Erzeugung zumindest eines zweiten Krafteinleitungswegs 44 der über den Fluggastsitz 10 in die Fahrzeugstruktur 14 eingeleiteten Gewichts- und Beschleunigungskraft 24 zu schaffen.

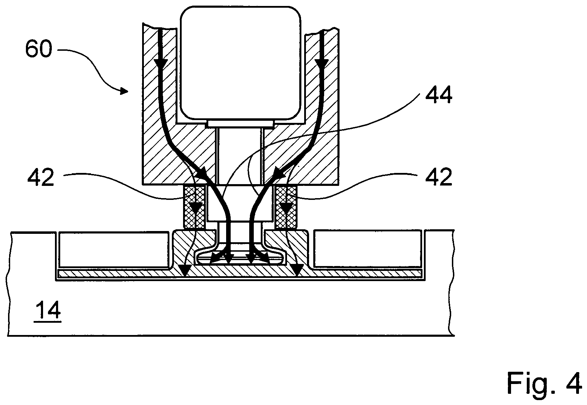

Aufgrund der im Aufprallmodus vom Fluggastsitz 10 auf dem ersten Krafteinleitungsweg 42 über das Übertragungsmittel 30 übertragenen und in die Fahrzeugstruktur 14 eingeleiteten Gewichts- und Beschleunigungskraft 24 erfährt das Übertragungsmittel 30 nämlich eine mechanische Verformung, die im Wesentlichen linear-elastischer Natur ist und sich darin äußert, dass eine Abmessung des Übertragungsmittels 30 in der Haupterstreckungsrichtung des Befestigungsmittels 32 reduziert ist (Fig. 4).

Eine Entfernung des dem Kabinenboden zugewandten Endes 64 der Sitzfußeinheit 60, 62 zu der der Sitzfußeinheit 60, 62 zugewandten Oberseite 56 der Befestigungsschiene 46 wird dadurch geringer. Bei im Aufprallmodus weiter ansteigender, vom Fluggastsitz 10 auf dem ersten Krafteinleitungsweg 42 über das Übertragungsmittel 30 übertragener und in die Fahrzeugstruktur 14 eingeleiteter Gewichts- und Beschleunigungskraft 24 kommt das dem Kabinenboden zugewandte Ende 64 der Sitzfußeinheit 60, 62 dem Mitnahmeelement 40 immer näher und schließlich zur Anlage mit diesem (Fig. 4). Aufgrund seiner geometrischen Auslegung ist das Mitnahmeelement 40 dazu vorgesehen, von der Sitzfußeinheit 60, 62 als beschleunigtem Teil des Fahrzeugsitzes bei dessen Bewegung in Richtung der Oberseite 56 der Befestigungsschiene 46 mitgeführt zu werden.

Durch die Mitführbewegung kommt das Befestigungsmittel 32 mit dem in Form eines Scheibenelements 36 ausgebildeten Ende 34 in Anlage mit dem Schienengrund 52 der Befestigungsschiene 46. In dieser Anordnung wird, durch die mechanische Verformung des Übertragungsmittels 30 initiiert, ein zweiter Krafteinleitungsweg 44 der über den Fahrzeugsitz in die Fahrzeugstruktur 14 eingeleiteten Gewichts- und Beschleunigungskraft 24 erzeugt. Der zweite Krafteinleitungsweg 44, der in der Fig. 4 dargestellt ist, führt über das dem Kabinenboden zugewandte Ende 64 der Sitzfußeinheit 60, 62, das Mitnahmeelement 40, einen Bereich des Befestigungsmittels 32 unterhalb des Mitnahmeelements 40 und das in Form eines Scheibenelements 36 ausgebildete Ende 34 des Befestigungsmittels 32 zu dem Schienengrund 52 der Befestigungsschiene 46.

Der erste Krafteinleitungsweg 42 und der zweite Krafteinleitungsweg 44 existieren in dieser Anordnung gleichzeitig. Aufgrund einer gewählten Materialeigenschaft und einer geometrischen Auslegung des Übertragungsmittels 30 ist eine Aufteilung der über den Fluggastsitz 10 in die Fahrzeugstruktur 14 eingeleiteten Gewichts- und Beschleunigungskraft 24 vorgesehen, die im Aufprallmodus einen Anteil an der in die Fahrzeugstruktur 14 eingeleiteten Gewichts- und Beschleunigungskraft 24 von 10% über den ersten Krafteinleitungsweg 42 und einen Anteil von 90% über den zweiten Krafteinleitungsweg 44 aufweist. Durch diese Auslegung werden im Aufprallmodus insbesondere die Profilflanken 54 der Befestigungsschiene 46 und das Übertragungsmittel 30 gegenüber einer Anordnung ohne Mitnahmeelement 40 entlastet, so dass an diese Bauteile nur geringere mechanische Festigkeitsanforderungen gestellt werden müssen, wobei dennoch alle Sicherheitsanforderungen mit den geringeren mechanischen Festigkeiten erfüllbar sind.

**Bezugszeichen**

| | | | |
|---|---|---|---|
| 10 | Fluggastsitz | 58 | untere Innenfläche |
| 12 | Innenraum | 60 | Sitzfußeinheit |
| 14 | Fahrzeugstruktur | 62 | Sitzfußeinheit |
| 16 | Sitzteil | 64 | Ende einer Sitzfußeinheit |
| 18 | Aufständereinheit | 66 | Aufnahmebereich |
| 20 | Vorderkante | 68 | Öffnung |
| 22 | Rückenlehne | | |
| 24 | Gewichts- und Beschleunigungskraft | | |
| 26 | vertikale Richtung | | |
| 28 | Kraftübertragungseinheit | | |
| 30 | Übertragungsmittel | | |
| 32 | Befestigungsmittel | | |
| 34 | Ende des Befestigungsmittels | | |
| 36 | Scheibenelement | | |
| 38 | oberer Bereich | | |
| 40 | Mitnahmeelement | | |
| 42 | erster Krafteinleitungsweg | | |
| 44 | zweiter Krafteinleitungsweg | | |
| 46 | Befestigungsschiene | | |
| 48 | Richtung | | |
| 50 | Längskanal | | |
| 52 | Schienengrund | | |
| 54 | Profilflanke | | |
| 56 | Oberseite | | |

## Patentansprüche

1. Sitzbefestigungsvorrichtung zur Befestigung eines Fahrzeugsitzes, insbesondere eines Fluggastsitzes (10), an zumindest einer an einer Fahrzeugstruktur (14) angebrachten Befestigungsschiene (46), mit einem Befestigungsmittel (32), das zu einer Kopplung mit der zumindest einen Befestigungsschiene (46) vorgesehen ist, und mit einer Kraftübertragungseinheit (28), die dazu vorgesehen ist, in einem Normalbetriebsmodus einen ersten Krafteinleitungsweg (42) einer über den Fahrzeugsitz in die Fahrzeugstruktur (14) eingeleiteten Gewichts- und Beschleunigungskraft (24) bereitzustellen, wobei die Kraftübertragungseinheit (28) ein Übertragungsmittel (30) aufweist, das dazu vorgesehen ist, in einem Aufprallmodus eine Erzeugung zumindest eines zweiten Krafteinleitungswegs (44) der über den Fahrzeugsitz in die Fahrzeugstruktur (14) eingeleiteten Gewichts- und Beschleunigungskraft (24) zumindest zu initiieren, wobei das Befestigungsmittel (32) zumindest ein Mitnahmeelement (40) aufweist, das dazu vorgesehen ist, im Aufprallmodus von einem beschleunigten Teil des Fahrzeugsitzes mitgeführt zu werden, wobei der zweite Krafteinleitungsweg (44) über das Mitnahmeelement (40) führt, **dadurch gekennzeichnet, dass**
das Mitnahmeelement (40) von dem Übertragungsmittel (30) nach außen im Wesentlichen abgedeckt ist.

2. Sitzbefestigungsvorrichtung nach Anspruch 1,
**dadurch gekennzeichnet, dass**
das Übertragungsmittel (30) die Erzeugung des zweiten Krafteinleitungswegs (44) der über den Fahrzeugsitz in die Fahrzeugstruktur (14) eingeleiteten Gewichts- und Beschleunigungskraft (24) durch mechanische Verformung initiiert.

3. Sitzbefestigungsvorrichtung nach Anspruch 2,
**dadurch gekennzeichnet, dass**
die mechanische Verformung des Übertragungsmittels (30) im Wesentlichen linear-elastischer Natur ist.

4. Sitzbefestigungsvorrichtung zumindest nach Anspruch 1,
**dadurch gekennzeichnet, dass**
das Mitnahmeelement (40) eine Abmessung in einer Richtung quer zu einer Haupterstreckungsrichtung des Befestigungsmittels (32) aufweist, die größer ist als Abmessungen von Teilen des Befestigungsmittels (32), die in der Haupterstreckungsrichtung vor oder hinter dem Mitnahmeelement (40) angeordnet sind, in dieser Richtung.

5. Sitzbefestigungsvorrichtung nach einem der vorhergehenden Ansprüche,
**dadurch gekennzeichnet, dass**
das Übertragungsmittel (30) im Wesentlichen aus einem Kunststoffmaterial besteht.

6. Fahrzeugsitz, insbesondere Fluggastsitz (10), mit einer Sitzbefestigungsvorrichtung nach einem der vorhergehenden Ansprüche.

## Claims

1. Seat fixing device for fixing a vehicle seat, in particular a flight passenger seat (10), to at least one fixing rail (46) that is mounted to a vehicle structure (14), with a fixing means (32) configured for coupling with the at least one fixing rail (46) and with a force transmission unit (28) configured to provide, in a normal operation mode, a first force introduction path (42) of a weight and acceleration force (24) introduced into the vehicle structure (14) via the vehicle seat, the force transmission unit (28) comprising a transmission means (30) that is configured to at least initiate, in an impact mode, a generation of at least one second force introduction path (44) of the weight and acceleration force (24) introduced into the vehicle structure (14) via the vehicle seat, wherein the fixing means (32) comprises at least one drive element (40), which is configured to be, in the impact mode, carried along by an accelerated part of the vehicle seat, the second force introduction path (44) going via the drive element (40),
**characterised in that**
the drive element (40) is substantially covered towards an outside by the transmission means (30).

2. Seat fixing device according to claim 1,
**characterised in that**
the transmission means (30) initiates the generation by way of a mechanical deformation of the second force introduction path (44) of the weight and acceleration force (24) introduced into the vehicle structure (14) via the vehicle seat.

3. Seat fixing device according to claim 2,
**characterised in that**
the mechanical deformation of the transmission means (30) is substantially of a linear-elastic type.

4. Seat fixing device at least according to claim 1,
**characterised in that**
the drive element (40) has a dimension in a direction that is transversal to a main extension direction of the fixing means (32), which is greater than dimensions in this direction of parts of the fixing means (32) that are arranged, in the main extension direction, before or after the drive element (40).

5. Seat fixing device according to claim one of the preceding claims,
**characterised in that**
the transmission means (30) is substantially made of a synthetic material.

6. Vehicle seat, in particular flight passenger seat (10), with a seat fixing device according to one of the preceding claims.

## Revendications

1. Dispositif de fixation de siège pour fixer un siège de véhicule, notamment un siège de passager d'aéronef (10), à au moins un rail à fixation (46) monté à une structure de véhicule (14), avec un moyen de fixation (32) configuré pour couplage avec l'au moins un rail à fixation (46) et avec une unité à transmission de force (28) configurée à fournir, dans un mode opératif normal, un premier chemin d'introduction de force (42) d'une force de pesanteur et accélération (24) introduite dans la structure de véhicule (14) via le siège de véhicule, l'unité à transmission de force (28) comprenant un moyen de transmission (30), lequel est configuré à au moins initier, dans un mode d'impact, une génération d'au moins un deuxième chemin d'introduction de force (44) de la force de pesanteur et accélération (24) introduite dans la structure de véhicule (14) via le siège de véhicule, le moyen de fixation (32) comprenant au moins un élément entraîneur (40) configuré à être entraîné, dans le mode d'impact, par une part accélérée du siège de véhicule, le deuxième chemin d'introduction de force (44) se déroulant en travers de l'élément entraîneur (40),
**caractérisé en ce que**
l'élément entraîneur (40) est au moins sensiblement couvert vers l'extérieur par le biais du moyen de transmission (30).

2. Dispositif de fixation de siège de véhicule selon la revendication 1,
**caractérisé en ce que**
le moyen de transmission (30) initie la génération, par le biais d'une déformation mécanique, du deuxième chemin d'introduction de force (44) de la force de pesanteur et accélération (24) introduite dans la structure de véhicule (14).

3. Dispositif de fixation de siège de véhicule selon la revendication 2,
**caractérisé en ce que**
la déformation mécanique du moyen de transmission (30) est substantiellement du type linéaire-élastique.

4. Dispositif de fixation de siège de véhicule au moins selon la revendication 1,
**caractérisé en ce que**
l'élément entraîneur (40) comporte une dimension dans une direction transversale à une direction d'extension principale du moyen de fixation (32), laquelle est plus grande que des dimensions dans cette direction des parts du moyen de fixation (32) disposées dans la direction d'extension principale, devant ou au derrière de l'élément entraîneur (40).

5. Dispositif de fixation de siège de véhicule selon l'une quelconque des revendications précédentes,
**caractérisé en ce que**
le moyen de transmission (30) consiste sensiblement d'un matériau synthétique.

6. Siège de véhicule, notamment siège de passager d'aéronef (10), avec un dispositif de fixation de siège de véhicule selon l'une quelconque des revendications précédentes.
